# EUROPÄISCHE PATENTSCHRIFT

(11) **EP 1 842 887 B1**
(45) Veröffentlichungstag und Bekanntmachung des Hinweises auf die Patenterteilung: **29.07.2009**
(21) Anmeldenummer: 07006899.4
(22) Anmeldetag: 03.04.2007
(51) Int. Cl.: C09J 5/02, B32B 27/00

(54) **Verfahren zum Bekleben von Polycarbonatscheiben mit einer Schutzfolie und daraus beklebter Polycarbonatscheibe**
Process to paste a protective film on polycarbonate panel and covered polycarbonate panel
Procédé pour l'encollage d'une vitre de polycarbonate avec un film protecteur et vitre de polycarbonate encollée ainsi produite

(30) Priorität: 04.04.2006 DE 102006016089
(43) Veröffentlichungstag der Anmeldung: 10.10.2007
(73) Patentinhaber: Baumann, Steffen, 01945 Arnsdorf (DE)
(72) Erfinder: Baumann, Steffen, 01945 Arnsdorf (DE)
(74) Vertreter: Haschick, Gerald

(56) Entgegenhaltungen:
- EP-A- 1 142 705
- WO-A-00/74937
- WO-A-20/06050242
- US-A- 4 489 134

## Beschreibung

Die Erfindung betrifft ein Verfahren zum Bekleben von Polycarbonatscheiben mit einer Schutzfolie und daraus resultierender beklebter Polycarbonatscheibe. Insbesondere werden dabei bestehende Polycarbonatscheiben von Gondeln, welche einer erhöhten Kratzgefahr unterliegen, mit einer Schutzfolie beklebt.

Bekannt sind einige Verfahren zum Bekleben von Glasscheiben bzw. Plastikscheiben mit Hilfe einer Schutzfolie. Dabei handelt es sich in den meisten Fällen um Autoscheiben, welche in den Abmaßen nicht sehr groß sind und somit ohne entsprechende Einschlüsse beklebt werden können. Eine Verfahrensweise zum Bekleben von Autoscheiben wird zum Beispiel auf der Internetseite der Firma Folia Tec unter www.securlux.de beschrieben.

Des Weiteren ist auch bekannt, dass Folien an Fenstern und Glasscheiben aufgeklebt werden, die aber nicht relevant für die technische Lösung sind. Die Problematik der Beklebung von Polycarbonatscheiben, insbesondere von Makrolonscheiben, mit Folie ist bis jetzt ein ungelöstes Thema. Die Schwierigkeit stellt sich bis zum jetzigen Zeitpunkt so dar, dass durch das Ausgasen beim Bekleben mit der Folie Luftblasen bei den Makrolonscheiben oder Fenstern bzw. Platten auftreten und somit eine Blasenbildung entsteht.

Der Nachteil dieser technischen Anwendung liegt darin begründet, dass auf Grund der Größe der zu beklebenden Scheiben, insbesondere aus Gondeln, das Problem entsteht, dass etwaige Ausgasungen bzw. Dreckpartikelzusätze und Staubpartikel als Einschlüsse mit der beschriebenen Verfahrensweise gegeben sind. Dies stellt den Nachteil des Standes der Technik dar.

Bekannt ist weiterhin eine Anmeldung US 4,489,134 "Process and apparatus for forming a window panel having an energy control film laminate". In diesem Patent wird ein Tauchverfahren für Fensterscheiben beschrieben, welche mit einer Schutzschicht beschichtet werden. Diese technische Lösung ist dahingehend nachteilig, dass sie einen hohen ökonomischen Aufwand durch ein Tauchbad aufweist und weiterhin dass hier keine Folien beaufschlagt werden können.

Des Weiteren ist eine Lösung PCT WO 2006/050242 "Method of primerless bonding" bekannt. Dabei wird eine Plastikbeschichtung mit Hilfe von Klebepflaster bzw. Heftpflaster aufgetragen. Der Nachteil dieser technischen Lösung besteht darin, dass durch ein normales Klebeverfahren mit Klebestreifen eine Aufbringung einer Plastikbeschichtung stattfindet, die nicht den Qualitätsansprüchen der diesseitig genannten Erfindung entspricht.

Weiterhin ist eine technische Lösung PCT WO 00/74937 "Polycarbonate articles and adhesive composition" gegeben. Bei dieser Erfindung handelt es sich um Beschichtungsmethoden von Polycarbonatsubstraten miteinander, welche zur diesseitig genannten Erfindung als nachteilig zu sehen ist, da sie einen hohen Aufwand darstellt.

Außerdem ist eine europäische Patentanmeldung EP 1 142 705 "Transparenter Mehrschicht-Verbund" bekannt. Offenbart wird ein transparenter Mehrschicht-Verbund aus mindestens drei Schichten, umfassend eine Innenschicht aus einem transparenten Kunststoff und zwei Außenschichten, deren Material ausgewählt ist aus Glas, Folien aus teilkristallinen Kunststoffen mit einer Transparenz von mindestens 40 %, Folien aus amorphen Kunststoffen und transparenten Beschichtungen. Hierbei ist der ökonomische Aufwand der Herstellung einer Verbundschicht zwischen einer Polycarbonatscheibe und einer klebenden Folie sehr hoch, was einen Nachteil darstellt.

Ziel der Erfindung ist es, ein Verfahren und schlussfolgernd daraus ein Endprodukt zu entwickeln, welches die vorhandenen Nachteile des Standes der Technik unterdrückt. Dabei ist das Ziel, eine Verklebung einer an sich bekannten Schutzfolie mit einer Polycarbonatscheibe so auszuführen, dass keinerlei Einschlüsse von Luftblasen bzw. Dreck- oder Staubpartikel vorhanden sind.

Aufgabe der Erfindung ist es, ein Verfahren zum Bekleben von Polycarbonatscheiben mit einer Schutzfolie und daraus resultierender beklebter Polycarbonatscheibe zu finden, wobei der Nachteil des Standes der Technik beseitigt wird und unter wenig ökonomischem Aufwand die Beklebung von Polycarbonatscheiben mit Schutzfolien auf großen Flächen durchgeführt werden kann.

Aufgabengemäß wird die Erfindung dadurch gelöst, dass die Hauptansprüche mit ihren Nebenansprüchen ausgeführt werden. Dabei werden insbesondere folgende Verfahrensschritte getätigt.

Bei der Schutzfolie handelt es sich um eine handelsübliche Schutzfolie, zum Beispiel von der Firma Folia Tec. Des Weiteren wird ein Gemisch hergestellt, welches aus destilliertem Wasser und einer Reinigungs- und Montageflüssigkeit besteht. Vorzugsweise wird dazu die Reinigungs- und Montageflüssigkeit Joy verwendet. Die entsprechende Gemischkonzentration wird so ausgeführt, dass 5 1 destilliertes Wasser zu 150 ml Reinigungs- und Montageflüssigkeit Joy gemischt werden. Außerdem werden Arbeitsplatten zum Anlegen der Polycarbonatscheiben und Schutzfolien vorbereitet, welche schräg an einer Wand positioniert werden. Diese Arbeitsplatten werden mit einem antistatischen Belag auf ihrer Oberfläche ausgeführt. Vorzugsweise wird hier ein antistatischer PVC-Belag benutzt. Die Schutzfolie wird auf die Polycarbonatscheibe mittels Gummirakel, Flachglasrakel, Goldrakel oder Teflonrakel aufgeklebt.

Bei der handelsüblichen Polycarbonatscheibe kann es sich insbesondere auch um Scheiben aus Makrolon^{®} handeln. Des Weiteren sind bekannt Polycarbonatscheiben mit der Bezeichnung Lexan der Kunststoffsparte von General Electric oder Calibre der Dow Chemical.

Nachfolgend werden diverse Verfahrensschritte ausgeführt.

Es werden für eine Beklebung einer Polycarbonatscheibe mit der Schutzfolie zwei Arbeitsplatten entsprechend an einer Wand mit einem unterliegenden Holzblock benötigt. Des Weiteren wird vorzugsweise der Fußboden mit Wasser angefeuchtet, um somit eine statische Übertragung zu vernachlässigen.

Eine Arbeitsplatte wird mit einem Gemisch angefeuchtet und danach gründlich mit einer Gummirakel gereinigt. Nach der Reinigung der Arbeitsplatte wird nochmals mit dem Gemisch angefeuchtet. Nachfolgend wird eine Polycarbonatscheibe zum Aufkleben der Schutzfolie an diese Arbeitsplatte angelegt, wobei die Polycarbonatscheibe gründlich gereinigt wird. Danach kann die zugeschnittene Schutzfolie zum Abziehen der Deckfolie auf die mit Gemisch befeuchtete Polycarbonatscheibe aufgelegt werden.

Die erste Arbeitsplatte, welche mit der Polycarbonatscheibe und der Schutzfolie belegt ist, dient zum Abziehen der Deckfolie von der Schutzfolie. Eine zweite Arbeitsplatte, welche unmittelbar daneben steht, dient zum Bekleben der Polycarbonatscheibe mit der Schutzfolie. Dabei wird die zweite Arbeitsplatte ebenfalls mit dem Gemisch angefeuchtet, gereinigt und mittels einer Gummirakel abgezogen. Nachfolgend wird nochmals die Arbeitsplatte mit dem Gemisch angefeuchtet. Danach wird die zu beklebende Polycarbonatscheibe auf der zweiten Arbeitsplatte aufgelegt und ebenfalls mit dem Gemisch angefeuchtet und mit einer Gummirakel abgezogen. Die zu beklebende Polycarbonatscheibe wird wiederum mit dem Gemisch angefeuchtet. Nachfolgend wird von der Schutzfolie die Deckfolie abgezogen. Unmittelbar nach Abziehen der Deckfolie wird die Schutzfolie mit dem Gemisch angefeuchtet, damit der Kleber, der sich unter der Deckfolie auf der Schutzfolie befindet, aktiviert wird. Nun wird die Schutzfolie schnell auf die Polycarbonatscheibe auf der zweiten Arbeitsplatte aufgeklebt und zentriert mit dem Gemisch angefeuchtet und abgerakelt.

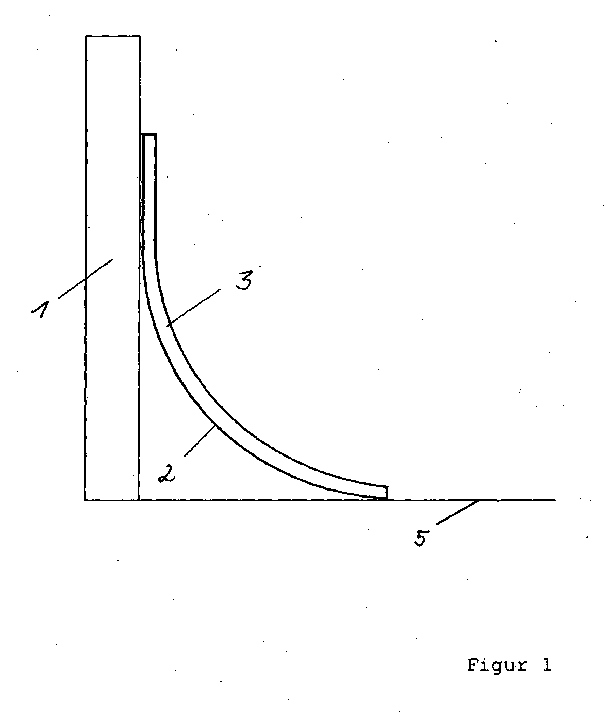

Einen abschließenden Prozess stellt die Trocknung dar, wobei bei dem Trocknungsprozess die beklebte Polycarbonatscheibe mit der Schutzfolie an eine Wand angelehnt wird und die bestehende bzw. gegebene Krümmung auf Grund der Größe der Schutzfolie so vorhanden ist, dass die Schutzfolie an der Wand anliegt. Schlussfolgernd aus diesem Trocknungsprozess heraus ist auf Grund der Spannungsgebung der Schutzfolie über die gesamte Fläche eine gleichmäßig hohe Klebekraft gegeben. Wichtig ist dabei zu beachten, dass in jedem Fall beim Abstellen zur Trocknung der Polycarbonatscheibe mit der Schutzfolie die Schutzfolie zur Innenseite hin zur Wand gegeben ist, um somit auf Grund der Krümmung die Spannung auf der Schutzfolie hervorzurufen und zu verhindern, dass entsprechende Luftblasen entstehen (siehe Figur 1).

Vorzugsweise wird eine dreilagige Schutzfolie verwendet. Des Weiteren ist es möglich, zusätzlich zur dreilagigen Schutzfolie auch einlagige Schutzfolien oder eine zweilagige Folie für die Beklebung der Polycarbonatscheibe der Gondel zu benutzen. Diese einlagigen bzw. zweilagigen Folien müssen beim Aufkleben auf die Scheibe nicht vorgespannt werden. Das heißt, dass die Abstellung der Gondelscheibe so erfolgt, dass die einlagige bzw. zweilagige Folie im Innenradius vorhanden ist.

Mit Hilfe des erfindungsgemäßen Verfahrens entsteht nun eine Polycarbonatscheibe, welche mit einer Schutzfolie beklebt ist. Grundsätzlich kann man davon ausgehen, dass bei der Beklebung der Polycarbonatscheibe mit der Schutzfolie eine Kombination entsteht, wobei keine inneren Einschlüsse, wie Luftblasen, Schmutzpartikel oder andere, gegeben sind.

Anhand eines Ausführungsbeispiels werden das gegebene Verfahren und die daraus resultierende Polycarbonatscheibe mit einer beklebten Schutzfolie beschrieben. Dafür sind zwei Zeichnungen gegeben, welche Folgendes zeigen:
- Figur 1: Trocknung der Polycarbonatscheibe mit beklebter Schutzfolie
- Figur 2: Anordnung der Polycarbonatscheibe zum Aufkleben der Schutzfolie

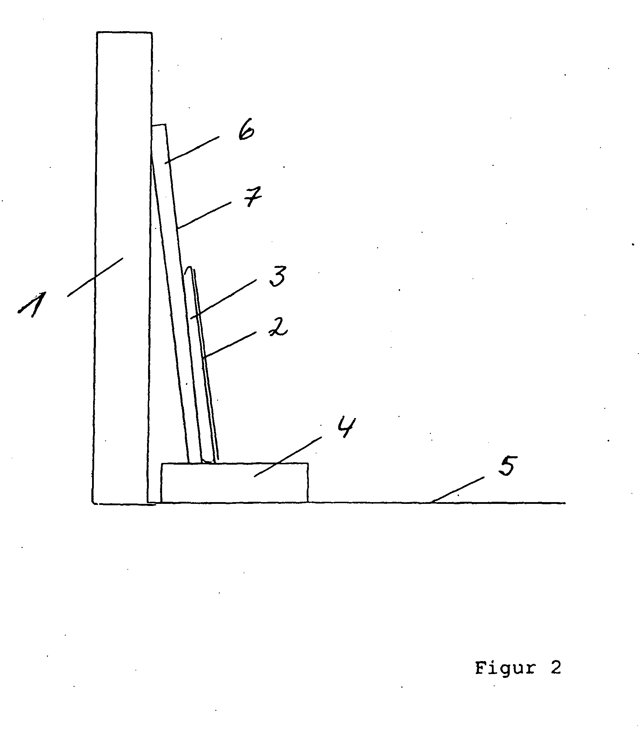

In der weiteren Beschreibung des Ausführungsbeispiels sind die beiden Figuren 1 und 2 im Zusammenhang zu betrachten.

Folgende verwendete Arbeitsmittel und Materialien werden zur Durchführung des Verfahrens mit seinem Endergebnis benötigt. Vorzugsweise wird eine dreilagige Folie FT 115, Securlux 600 als Schutzfolie 2 verwendet. Die Folie ist farblos bzw. transparent, und nach dem Aufkleben entsteht keine Verzerrung des Sichtfeldes. Eine Seite der Folie ist mit einer Schicht zur Erhöhung der Kratzfestigung versehen, auf der anderen Seite ist ein druckempfindlicher Acryl-Montage-Kleber aufgebracht. Die dreilagige Folie ist mit einem Acryl-Laminat-Kleber verbunden. Die Folie hat eine Dicke von 0,167 mm ± 20 %. Im Folgenden Schutzfolie 2 genannt. Zum Aufkleben der Schutzfolie 2 wird eine Deckfolie entfernt, und nach Aufbringen des erfindungsgemäßen Gemisches wird der Kleber der Schutzfolie 2 aktiviert. Für die verfahrensgemäße Anwendung zum Verkleben von Schutzfolien 2 mit der Polycarbonatscheibe 3 wird ein Gemisch aus destilliertem Wasser und der Reinigungs- und Montageflüssigkeit Joy verwendet. Destilliertes Wasser wird dazu genutzt, dass keine weißen Ränder und Flecken durch den zugeführten Kalk im Leitungswasser entstehen. Die Flüssigkeiten werden im Mischungsverhältnis von 5 1 destilliertem Wasser zu 150 ml der Reinigungs- und Montageflüssigkeit Joy vermischt. Nachfolgend wird dieses Produktgemisch als Gemisch benannt.

Das entsprechende Ausführungsbeispiel stellt eine Beklebung von Polycarbonatscheiben 3 einer Gondel von Liftanlagen dar. Diese Gondeln von Liftanlagen unterliegen insbesondere einer erhöhten Kratz- und Schmutzbelastung, da durch die Befahrung dieser Gondeln mit den gegebenen Skiern eine erhöhte Kratzbelastung dieser Polycarbonatscheiben 3 stattfindet. Um dieser erhöhten Kratz- und Schmutzbelastung entgegen zu wirken, ist das erfindungsgemäße Verfahren entwickelt worden, welches die vorhandenen Polycarbonatscheiben 3 in Liftgondeln mit einer entsprechenden Schutzfolie 2 mit erhöhter Kratzfestigkeit bestücken.

Grundsätzlich wird nach Figur 1 ein Holzblock 4 als Arbeitsgrundlage und die dazugehörige Wand 1 benötigt. Auf diesem Holzblock 4 wird eine jeweilige erste, zweite und weitergehende Arbeitsplatte 6 ausgeführt, welche erfindungswesentlich mit einem entsprechenden antistatischen Belag 7 beaufschlagt ist, vorzugsweise nimmt man hierfür einen antistatischen PVC-Belag. Bei der Befeuchtung und Abrakelung der Arbeitsplatte 6, Polycarbonatscheibe 3 und Schutzfolie 2 werden insbesondere Gummirakel, Flachglasrakel, Goldrakel und Teflonrakel benutzt.

Nachstehende Verfahrensschritte werden in der Reihenfolge ausgeführt.

Für eine Beklebung einer Polycarbonatscheibe 3 werden zwei nebeneinander aufgestellte Arbeitsplatten 6 benötigt. Dabei werden die erste und zweite Arbeitsplatte 6 schräg an die Wand 1 auf dem Holzblock 4 positioniert. Bevor eine Beklebung stattfindet, wird der Fußboden mit Wasser angefeuchtet, um somit eine statische Aufladung zu verhindern.

Eine erste Arbeitsplatte 6 wird mit einem Gemisch angefeuchtet. Nach der Befeuchtung wird die Arbeitsplatte 6 gründlich gereinigt und mit einem Gummirakelgemisch abgezogen. Als nächster Arbeitsschritt wird nochmals die Arbeitsplatte 6 mit einem Gemisch angefeuchtet. Eine nachfolgende Polycarbonatscheibe 3 wird nun an die erste Arbeitsplatte 6 angelegt und ebenfalls gründlich gereinigt. Anschließend wird mittels eines Gummirakels das Gemisch von der Polycarbonatscheibe 3 abgezogen.

Wichtig ist dabei, dass hier kein Reinigungstuch verwendet wird, sonst lädt sich die Polycarbonatscheibe 3 statisch auf und zieht Staub an; also nur reinigen, abziehen und wieder mit Gemisch anfeuchten. Danach kann die zugeschnittene Schutzfolie 2 zum Abziehen der Deckfolie auf die mit Gemisch befeuchtete Polycarbonatscheibe 3 aufgelegt werden. Die erste Arbeitsplatte 6 und die Polycarbonatscheibe 3 dienen zum Abziehen der Deckfolie. Die zweite Arbeitsplatte 6, welche unmittelbar daneben steht, dient nur zum Bekleben der Polycarbonatscheibe 3. Diese zweite Arbeitsplatte 6 wird ebenfalls mit dem Gemisch angefeuchtet, gereinigt und mittels Gummirakel abgezogen. Nachfolgend wird nochmals die Arbeitsplatte 6 mit dem Gemisch angefeuchtet.

Anschließend wird die Polycarbonatscheibe 3 auf die zweite Arbeitsplatte 6 aufgelegt und ebenfalls mit dem Gemisch angefeuchtet und nur mit der Gummirakel abgezogen. Wichtig ist dabei, dass hier keine Reinigungstücher wegen der statischen Aufladung oder der Staubentwicklung verwendet werden. Der Staub wird sonst von der Polycarbonatscheibe 3 angezogen und erscheint als Staubeinschluss zwischen der nachfolgend aufgeklebten Schutzfolie 2 und der Polycarbonatscheibe 3. Dies stellt dahingehend einen optischen Mangel dar, da sich die Folie nicht an den Staubeinschlüssen anlegt.

Des Weiteren wird die zu beklebende Polycarbonatscheibe 3 nochmals mit einem Gemisch angefeuchtet. Danach wird die Deckfolie von der Schutzfolie 2 abgezogen. Sofort nach Abziehen der Deckfolie von der Schutzfolie 2 wird mit dem Gemisch angefeuchtet, damit der Kleber, der sich unter der Deckfolie auf der Schutzfolie 2 befindet, aktiv wird. Nun wird schlussfolgernd daraus die Schutzfolie 2 schnell auf die Polycarbonatscheibe 3 auf der zweiten Arbeitsplatte 6 aufgelegt, zentriert und mit Gemisch angefeuchtet und abgerakelt. Die Reihenfolge des Ausrakelns ist unbedingt einzuhalten. Zuerst mit einer Gummirakel einmal die gesamte Fläche ausrakeln; danach wieder mit dem Gemisch anfeuchten und mit einer Flachglasrakel immer in eine Richtung, von oben nach unten, ausrakeln; nochmals mit dem Gemisch anfeuchten und mit einer Goldrakel von der Mitte nach oben und dann nach unten ausrakeln. Wichtig ist dabei: zuerst nach oben, damit das Gemisch nicht wieder auf die schon ausgerakelten Flächen läuft. Der Arbeitsschritt mit Flachglasrakel und Goldrakel ist mit hohem Anpressdruck auf die Schutzfolie 2 durchzuführen. Der Einsatz von reichlich Gemisch ist nötig, damit die Rakel gut gleiten kann und die Schutzfolie 2 nicht beschädigt wird. Dabei muss man darauf achten, dass man Strich für Strich leicht überlappend rakelt, um zu verhindern, dass sich zwischen der Schutzfolie 2 und der Polycarbonatscheibe 3 Gemischeinschlüsse ansammeln. An den fertig ausgerakelten Flächen bindet der Kleber der Schutzfolie 2 sofort mit der Polycarbonatscheibe 3. Ein nochmaliges Nachrakeln der Schutzfolie 2 mit der Polycarbonatscheibe 3 ist nicht zu empfehlen, da dadurch die Verbindung von Kleber und Polycarbonatscheibe 3 aufreißt, und es entstehen Blasen oder blinde Flecken. Deshalb ist es ratsam, gründlich und kräftig nach dem ablaufenden Verfahren zu rakeln, da eine Nacharbeit nicht möglich ist. Die fertig ausgerakelte Polycarbonatscheibe 3 ist mit gegebenem Putzpapier zu trocknen, da sonst Feuchtigkeit von Außen nach Innen difundieren kann. Die beklebte Polycarbonatscheibe 3 ist nun fertig und kann zum Trocknen an eine bestehende Wand 1 abgestellt werden.

Dabei ist erfindungswesentlich der Verfahrensschritt zu beachten, dass die Polycarbonatscheibe 3 mit der Schutzfolie 2 gemäß der Figur 1 so ausgeführt wird, dass beim Trocknen die Schutzfolie 2 an der Wand 1 innen liegend anliegt. Verwendet man nun einlagige und zweilagige Schutzfolien ist die Stellung der Polycarbonatscheibe 3 so ausgeführt, dass die Schutzfolie 2 im Innenradius angeordnet ist, wobei die Scheibe 3 an der Wand anliegend steht. Wird die Polycarbonatscheibe 3 anders herum abgestellt, so dass die Schutzfolie 2 innen liegend der Krümmung vorhanden ist, entstehen folgende Schäden. Es bilden sich von der Restfeuchtigkeit zwischen Schutzfolie 2 und Polycarbonatscheibe 3 beim Trocknen Wasseransammlungen, und die Schutzfolie 2 wird gestaucht. Damit erreicht sie nicht auf der gesamten Fläche die gewollte Klebkraft. Somit entstehen Ablösungen der Schutzfolie 2 bzw. Blasen.

Wird erfindungsgemäß die Polycarbonatscheibe 3 - wie in der Figur 2 - innen liegend zur Wand 1 hin mit der Schutzfolie 2 abgestellt, dann spannt man die Schutzfolie 2 über die gesamte Fläche. Dabei hat die Schutzfolie 2 eine gleichmäßig hohe Klebkraft und sieht nach dem Ende der Trocknung und dem Einbau völlig glasklar und eben aus, was den erfindungswesentlichen Vorteil zum Stand der Technik darstellt.

## Patentansprüche

1. Verfahren zum Bekleben von Polycarbonatscheiben auf Skigondeln, bei Sicherheitsverglasungen, in Stadien und auf Fahrzeugkabinen, wobei auf einer Polycarbonatscheibe eine Schutzfolie aufgeklebt wird, **dadurch gekennzeichnet, dass** eine Arbeitsplatte (6), eine Polycarbonatscheibe (3) und eine Schutzfolie (2) mit einem Gemisch aus Wasser und einer Reinigungs- und Montageflüssigkeit angefeuchtet und abgerakelt werden, wobei die Schutzfolie (2) nach Abziehen der Deckfolie angefeuchtet und auf die Polycarbonatscheibe (3) aufgeklebt wird und die beklebte Polycarbonatscheibe (3) mit der Schutzfolie (2) zum Trocknen ausgerichtet wird.

2. Verfahren nach Anspruch 1 **dadurch gekennzeichnet, dass** bei Verwendung einer einlagigen bzw. zweilagigen Schutzfolie (2) die beklebte Polycarbonatscheibe (3) mit der einlagigen bzw. zweilagigen Schutzfolie (2) zum Trocknen aufgestellt wird und die Polycarbonatscheibe (3) an der Wand (1) anliegt.

3. Verfahren nach Anspruch 1 **dadurch gekennzeichnet, dass** bei Verwendung einer dreilagigen Schutzfolie (2) und nach Verklebung der Polycarbonatscheibe (3) und der Schutzfolie (2) die Polycarbonatscheibe (3) ausgerichtet wird und die Schutzfolie (2) an der Wand (1) anliegt.

4. Verfahren nach Anspruch 1 **dadurch gekennzeichnet, dass** ein Gemisch aus 5 1 Wasser und 150 ml Reinigungs- und Montageflüssigkeit hergestellt wird.

5. Verfahren nach Anspruch 1 **dadurch gekennzeichnet, dass** beim Trocknen der beklebten Polycarbonatscheibe (3) ein Krümmungsradius entsteht, wobei die aufgeklebte Schutzfolie (2) an der Innenseite zur Wand (1) hin anliegt.

6. Verfahren nach Anspruch 1 **dadurch gekennzeichnet, dass** in verschiedenen Arbeitsgängen das Gemisch auf die Arbeitsplatte (6), die Polycarbonatscheibe (3) und die Schutzfolie (2) aufgebracht und abgerakelt wird, wobei folgende Reihenfolge stattfindet:
a) Arbeitsplatte (6) mit dem Gemisch anfeuchten und abrakeln
b) Arbeitsplatte (6) erneut mit dem Gemisch anfeuchten
c) Polycarbonatscheibe (3) mit dem Gemisch anfeuchten und abrakeln
d) Polycarbonatscheibe (3) mit dem Gemisch anfeuchten
e) Schutzfolie (2) nach Abziehen der Deckfolie mit Gemisch anfeuchten
f) Schutzfolie (2) auf die Polycarbonatscheibe (3) auflegen und ankleben und mit dem Gemisch anfeuchten und ausrakeln
g) beklebte Polycarbonatscheibe (3) und Schutzfolie (2) trocknen

7. Polycarbonatscheibe beklebt mit einer Schutzfolie **dadurch gekennzeichnet, dass** eine Polycarbonatscheibe (3) mit einer Schutzfolie (2) beklebt ist, wobei keine inneren Einschlüsse zwischen der Polycarbonatscheibe (3) und der Schutzfolie (2) vorhanden sind.

8. Polycarbonatscheibe nach Anspruch 5 **dadurch gekennzeichnet, dass** die Polycarbonatscheibe (3) mit aufgeklebter Schutzfolie (2) eine Krümmung aufweist.

9. Polycarbonatscheibe nach Anspruch 5 **dadurch gekennzeichnet, dass** die aufgebrachte Schutzfolie (2) farblos und transparent ist, wobei eine Seite zur Erhöhung der Kratzfestigkeit vorgesehen ist und auf der anderen Seite ein druckempfindlicher Acryl-Montage-Kleber vorhanden ist.

## Claims

1. Method for pasting polycarbonate panes to ski gondolas, in safety glazing, stadiums and to vehicle cabins by pasting a protective film onto a polycarbonate pane, **characterised in that** a work plate (6), a polycarbonate pane (3) and a protective film (2) are moistened with a mixture of water and a cleaning and mounting fluid and spread with a doctor blade, with the protective film (2) being moistened following peeling off the top film and pasted to the polycarbonate pane (3) and the pasted up polycarbonate pane (3) being aligned with the protective film (2) for drying.

2. Method according to claim 1, **characterised in that** upon use of a single-layer or two-layer protective film (2), the pasted up polycarbonate pane (3) with single-layer or two-layer protective film (2) is put up for drying and the polycarbonate pane (3) fits closely to the wall (1).

3. Method according to claim 1, **characterised in that** upon use of a three-layer protective film (2) and following bonding of the polycarbonate pane (3) and protective film (2) the polycarbonate pane (3) is aligned and the protective film (2) fits closely to the wall (1).

4. Method according to claim 1, **characterised in that** a mixture is produced of 5 litres water and 150 ml cleaning and mounting fluid.

5. Method according to claim 1, **characterised in that** during drying of the pasted up polycarbonate pane (3) a bending radius is created, while the pasted protective film (2) fits closely to the interior of the wall (1).

6. Method according to claim 1, **characterised in that** the mixture is doctored to the work plate (6), polycarbonate pane (3) and protective film (2) in several process steps and spread with a doctor blade in the below sequence:
a) Moisten the work plate (6) with mixture and spread mixture with a doctor blade
b) Re-moisten the work plate (6) with mixture
c) Moisten the polycarbonate pane (3) with mixture and spread mixture with a doctor blade
d) Polycarbonate pane (3) with mixture moisten
e) Peel off the top film and moisten the protective film (2) with mixture
f) Place the protective film (2) on the polycarbonate pane (3) and bond the film, then moisten with mixture and spread with a doctor blade
g) Dry the pasted up polycarbonate pane (3) and protective film (2)

7. A polycarbonate pane pasted up with a protective film **characterised in that** a polycarbonate pane (3) is pasted up with a protective film (2) without any internal inclusions between polycarbonate pane (3) and protective film (2).

8. Polycarbonate pane according to claim 5
**characterised in that** the polycarbonate pane (3) with pasted up protective film (2) is provided with a curvature.

9. Polycarbonate pane according to claim 5,
**characterised in that** the applied protective film (2) is colourless and transparent, with one being intended to enhance scratch resistance and the other side being provide with a pressure-sensitive acrylic assembly adhesive.

## Revendications

1. Procédé pour l'encollage de vitres en polycarbonate sur des cabines de téléphérique, dans le cas de vitrages de sécurité, dans les stades et sur les cabines de véhicules, un film protecteur étant collé sur une vitre en polycarbonate, **caractérisé en ce qu'**une plaque de support (6), une vitre en polycarbonate (3) et un film protecteur (2) sont humidifiés et raclés avec un mélange d'eau et de liquide de nettoyage et de fixation, le film protecteur (2) étant humidifié après avoir retiré le film de recouvrement et collé sur la vitre en polycarbonate (3) et la vitre en polycarbonate (3) sur laquelle est collé le film protecteur (2) étant redressée pour sécher.

2. Procédé selon la revendication 1, **caractérisé en ce que,** en cas d'utilisation d'un film protecteur (2) à une ou deux couches, la vitre de polycarbonate (3) sur laquelle est collé le film protecteur (2) à une ou deux couches est mise à la verticale pour sécher et la vitre en polycarbonate (3) repose contre la paroi (1).

3. Procédé selon la revendication 1, **caractérisé en ce que**, en cas d'utilisation d'un film protecteur à trois couches (2) et après avoir collé la vitre de polycarbonate (3) avec le film protecteur (2), la vitre de polycarbonate (3) est redressée et le film protecteur (2) repose contre la paroi (1).

4. Procédé selon la revendication 1, **caractérisé en ce qu'**un mélange est préparé à partir de 5 l d'eau et 150 ml de liquide de nettoyage et de fixation.

5. Procédé selon la revendication 1, **caractérisé en ce que,** lors du séchage de la vitre en polycarbonate (3) encollée, il apparaît un rayon de courbure, le film protecteur (2) collé dessus se trouvant sur la face interne de la paroi (1).

6. Procédé selon la revendication 1, **caractérisé en ce que,** au cours de différentes étapes de travail, le mélange est appliqué et raclé sur la plaque support (6), la vitre en polycarbonate (3) et le film protecteur (2), en suivant l'ordre suivant :
a) Humidification et raclage de la plaque support (6) avec le mélange.
b) Nouvelle humidification de la plaque support (6) avec le mélange.
c) Humidification et raclage de la plaque de polycarbonate (3) avec le mélange.
d) Humidification de la vitre de polycarbonate (3) avec le mélange.
e) Humidification du film protecteur (2) avec le mélange après avoir retiré le film de recouvrement.
f) Application et collage du film protecteur (2) sur la vitre en polycarbonate (3) et humidification et raclage avec le mélange.
g) Séchage de la vitre de polycarbonate (3) sur laquelle est collé le film protecteur (2).

7. Vitre en polycarbonate sur laquelle est collé un film protecteur, **caractérisée en ce qu'**un film protecteur (2) est collé sur la vitre de polycarbonate (3) en excluant toute inclusion entre la vitre de polycarbonate (3) et le film protecteur (2).

8. Vitre en polycarbonate selon la revendication 5, **caractérisée en ce que** la vitre de polycarbonate (3) avec le film protecteur (2) collé dessus présente une courbure.

9. Vitre en polycarbonate selon la revendication 5, **caractérisée en ce que** le film protecteur appliqué (2) est incolore et transparent, une face étant prévue pour améliorer la résistance aux éraflures et une colle acrylique de fixation sensible à la pression étant présente sur l'autre face.
